Europäisches Patentamt

European Patent Office

Office européen des brevets

(19)

(11) Veröffentlichungsnummer : **0 465 468 B1**

(12)

# EUROPÄISCHE PATENTSCHRIFT

(45) Veröffentlichungstag der Patentschrift :
**21.10.92 Patentblatt 92/43**

(51) Int. Cl.$^5$ : **B65D 85/48, B65G 49/06**

(21) Anmeldenummer : **90902629.6**

(22) Anmeldetag : **02.02.90**

(86) Internationale Anmeldenummer :
**PCT/EP90/00184**

(87) Internationale Veröffentlichungsnummer :
**WO 90/11238 04.10.90 Gazette 90/23**

(54) **LAGER- UND TRANSPORTVORRICHTUNG FÜR PLATTEN.**

(30) Priorität : **28.03.89 DE 8903789 U**

(43) Veröffentlichungstag der Anmeldung :
**15.01.92 Patentblatt 92/03**

(45) Bekanntmachung des Hinweises auf die
Patenterteilung :
**21.10.92 Patentblatt 92/43**

(84) Benannte Vertragsstaaten :
**AT BE CH DE DK FR GB IT LI NL SE**

(56) Entgegenhaltungen :
**US-A- 3 533 502**
**US-A- 3 927 764**

(73) Patentinhaber : **Schmidmeister, Gerhard**
**Bernsteinstrasse 161**
**W-7000 Stuttgart 75 (Heumaden) (DE)**

(72) Erfinder : **Schmidmeister, Gerhard**
**Bernsteinstrasse 161**
**W-7000 Stuttgart 75 (Heumaden) (DE)**

(74) Vertreter : **Wolff, Michael, Dipl.-Phys.**
**Kirchheimer Strasse 69**
**W-7000 Stuttgart 75 (DE)**

EP 0 465 468 B1

## Beschreibung

Die Erfindung betrifft eine Vorrichtung zum lagern und Transportieren von mehreren lackierten Türen oder anderen Platten, mit im wesentlichen rechtwinkligen Rahmen, die an den gegebenenfalls gefalzten Stirnseiten der Platten in der Weise anzuordnen sind, daß ihre längeren Mittellinien die Längslinien der Stirnseiten decken, und welche mittels Schrauben oder dergleichen an den Stirnseiten lösbar zu befestigen sind.

Die einzige bekannte Vorrichtung dieser Art weist hauptsächlich nur die als "Türenleger" bekannten Rahmen auf, die mit ihrer längeren Mittellinie waagrecht aufeinandergelegt werden, und zwar nicht nur beim lagern der lackierten Türen, sondern auch zu deren Transport, während dessen die Platten also waagrecht liegen. Dabei haben die zwei Rahmenstapel je in sich keine Rahmenverbindungen, so daß die Rahmen sowohl quer zur Transportrichtung bei einer Kurvenfahrt als auch in Transportrichtung während des Bremsens oder Beschleunigens des Transportfahrzeuges gegeneinander verrutschen können, wovor nur das allseitige Halten der Platten vollkommen schützen würde. Man behilft sich aber damit, den Transport von einer Person begleiten zu lassen, die nur die Aufgabe hat zu verhindern, daß die vertikal gestapelten waagrechten Platten aus dem Stapel ausbrechen.

An der bekannten Vorrichtung ist folglich nachteilig, daß entweder die Gefahr einer Störung des Plattenstapels besteht, welche beispielsweise zur Beschädigung der Lackoberfläche führen kann, oder aber mindestens zwei Transporteure erforderlich sind.

Der Erfindung liegt daher die Aufgabe zugrunde, eine diesen Nachteil vermeidende Vorrichtung zum lagern und Transport von mehreren Platten, insbesondere lackierten Türen, zu schaffen, welche mit einem Transporteur auskommt und dennoch die Gewähr dafür bietet, daß die transportierten Platten unbeschädigt ankommen.

Diese Aufgabe ist bei einer Vorrichtung der eingangs genannten Art erfindungsgemäß gelöst durch ein Rohrgestell mit einem ebenen rechteckigen Grundrahmen, der zwei Paare je paralleler, ggf. teleskopierbarer, Schenkel aufweist, mit einem gestützten Pfosten auf jeder Grundrahmenecke, und mit zwei parallelen, auf den oberen Pfostenenden gelagerten, ggf. teleskopierbaren Traversen über den die Längsschenkel verbindenden parallelen Querschenkeln des Grundrahmens und durch zwei auf jeder Traverse verschieb- und feststellbar gelagerte vertikale Lineale zum Einklemmen einer waagrechten Reihe der an den Platten befestigten Rahmen, die hochkant auf der Traverse stehen.

Durch den so ausgestalteten Grundrahmen wird vorteilhafterweise erreicht, daß nun alle Platten über die angeschraubten Rahmen, die am Rohrgestell mittels der Lineale eingeklemmt sind, kraftschlüssig miteinander verbunden sind, so daß der Plattenstapel auch beim Transport stets eine geschlossene Form behält.

Bei einer bevorzugten Ausführungsform der erfindungsgemäßen Vorrichtung ist vorgesehen, daß die Traversen länger sind als die Querschenkel des Grundrahmens und freie Enden aufweisen, die beispielsweise über Radkästen angeordnet sein können, zwischen denen der Grundrahmen gerade Platz hat. Es ist also auch dann eine gute Raumausnutzung zum Transport möglichst vieler Platten möglich, wenn unterhalb der Traversen der Raum seitlich eingeengt ist.

Bei einer Weiterbildung der bevorzugten Ausführungsform, bei der nicht nur die längsschenket des Grundrahmens, sondern auch dessen Querschenkel und dementsprechend die Traversen teleskopierbar sind, damit die Grundfläche der Vorrichtung der Stellfläche des Transportfahrzeuges angepaßt werden kann und dadurch ein Verrutschen der ganzen Vorrichtung mit den transportierten Türen vermeidbar ist, bestehen die Querschenkel und die Traversen je aus zwei profilgleichen ersten und zweiten Rohren und aus einem in diese eingefügten profitähnlichen dritten Rohr, das im ersten Rohr befestigt und im zweiten Rohr längsverschiebbar angeordnet ist; außerdem kann zur Vermeidung einer die Verschiebung der Lineale störenden Stufe am Übergang des dritten zum ersten bzw. zweiten Rohr ein auf den gewählten lichten Abstand des ersten vom zweiten Rohr abgelängtes, profilgleiches viertes Rohr zwischen dem ersten und dem zweiten Rohr auf dem dritten Rohr angeordnet werden. Bei einer Veränderung der Traversenlänge zur Breiteneinstellung der Vorrichtung wird das vierte Rohr einfach gekürzt oder durch ein längeres Stück ersetzt.

Im folgenden ist die Erfindung anhand der durch die Zeichnung beispielhaft dargestellten bevorzugten Ausführungsform der erfindungsgemäßen Vorrichtung und ihrer Weiterbildung im einzelnen erläutert. Es zeigt:

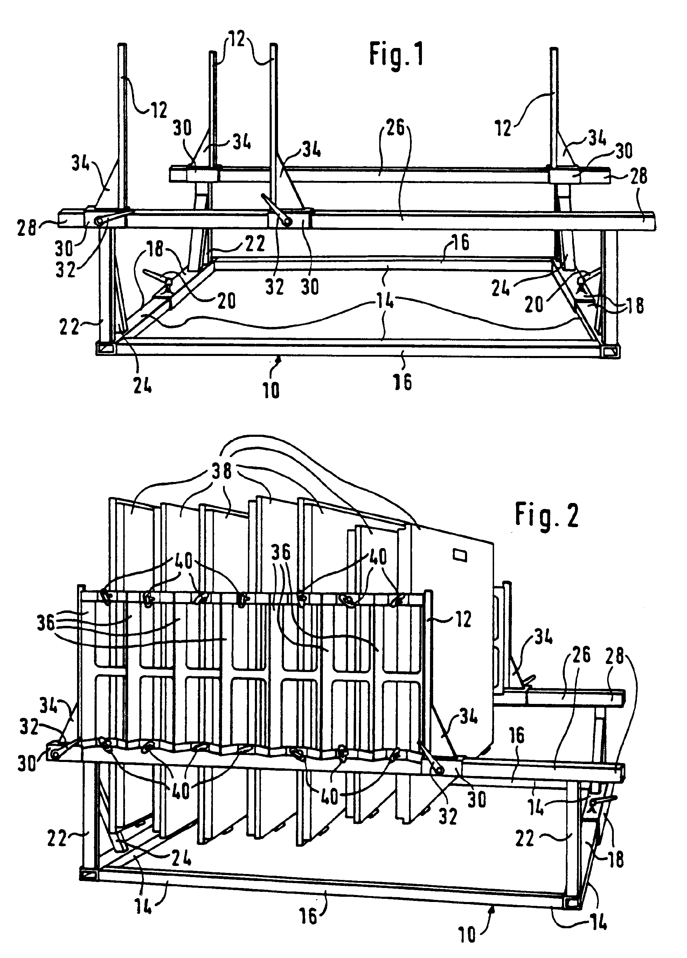

Fig. 1 eine perspektivische Ansicht der Ausführungsform ohne Türen von hinten auf die Mitte

Fig. 2 eine perspektivische Ansicht der Ausführungsform mit Türen von hinten auf die rechte Seite

Fig. 3 eine perspektivische Ansicht der Weiterbildung der Ausführungsform entsprechend Fig. 1 im Ausschnitt

Im Ausführungsbeispiel besteht die erfindungsgemäße Vorrichtung zum lagern und Transportieren von mehreren lackierten Türen oder anderen Platten hauptsächlich aus einem überwiegend rechtwinkligen Gestell 10 und zweimal zwei Linealen 12.

Das Gestell 10 ist aus Vierkantrohren gebildet und weist einen ebenen rechteckigen Grundrahmen 14 auf, der aus zwei U-förmigen zusammengesteckten Hälften besteht und zwei ununterbrochene parallele Querschenkel 16 sowie zwei unterteilte parallele Längsschenkel 18 aufweist, die teleskopierbar sind und deren länge durch Anziehen je einer mit einem Handhebel 20 versehenen Schraube festlegbar ist. Dadurch ist eine Anpassung der Gestellgröße an die Höhe der stehenden Türen, oder besser gesagt: an die länge der hochkant liegenden Türen, möglich. Auf den durch die Rahmenschenkel gebildeten vier Ecken des Grundrahmens 14 stehen Pfosten 22 des Gestells 10, welche mittels schräger Stützen 24 desselben je mit einem Teil der längsschenket 18 starr verbunden sind.

An jeder Hälfle des Grundrahmens 14 ist auf den oberen Enden der beiden zugehörigen Pfosten 22 über dem diese tragenden Querschenkel 16 parallel zu diesem eine Traverse 26 gelagert, die länger ist als der Querschenkel 16, so daß sie mit zwei freien Enden 28 über den Grundrahmen 14 hinaussteht. Auch die zwei Traversen 26 sind vierkantige Rohre.

Auf jeder Traverse 26 reiten zwei U-förmig profilierte Schieber 30, die je mittels einer mit einem Handhebel 32 versehenen Schraube feststellbar sind und je eines der zwei Lineale 12 tragen, das mittels eines hochkant stehenden Dreiecks 34 abgestützt ist. Die zwei Dreiecke 34 der beiden Schieber 30 an jeder Traverse 26 stehen außerhalb des freizuhaltenden Raumes zwischen den beiden Linealen 12.

Da die waagrecht quer zu ihrer Längsrichtung gemessene Breite jeder Traverse 26 etwas größer ist als die gleichgemessene Breite der sie tragenden Pfosten 22, können die beiden Schieber 30 auf je eines der beiden freien Enden 28 der Traverse geschoben werden, so daß der senkrechte Abstand der beiden Lineate 12 voneinander ebenso groß ist wie die länge des zugeordneten Querschenkels 16 unter der Traverse 26 und deren zwischen den beiden Pfosten 22 gelegener Abschnitt völlig zum lagern sogenannter Türenleger genutzt werden kann.

Diese Türenleger 36 sind im wesentlichen rechtwinklige Rahmen, die an den gefalzten Stirnseiten der zu lagernden und insbesondere zu transportierenden lackierten Türen 38 (Platten) in der Weise angeordnet sind, daß ihre längeren Mittellinien die Längslinien der Stirnseiten decken. Mittels handlicher schrauben 40 sind die Türenleger 36 an den Stirnseiten der Türen 38 lösbar befestigt.

Die am Gestell 10 zu lagernden und mit ihm zu transportierenden Türen 38 werden dadurch hochkant gestellt, wobei ihre mit Scharnierteilen versehene längere Stirnseite schließlich unten liegt, daß jeweils die beiden Türenleger 36 an jeder Türe hochkant auf eine der beiden Traversen 26 gestellt werden. Dabei werden auf jeder Traverse 26 die Türenleger 36 dicht zusammengestellt, worauf sie mittels der herangeschobenen beiden Lineale 12 als Einheit eingeklemmt werden, so daß sie sich in Längsrichtung der Traverse nicht bewegen können. - Da die Türen 38 von oben her in den Raum zwischen den beiden Traversen 26 einerseits und dem Grundrahmen 14 andererseits eingreifen,und zwar so, daß sie dabei mit ihren sich vertikal erstreckenden Stirnseiten an den Traversen beinahe anschlagen, können sich die Türen auch nicht in Längsrichtung der Längsschenkel 18 des Grundrahmens bewegen.

In einem Transportfahrzeug mit einer Auflagefläche für den Grundrahmen 14, an welcher sich seitlich hinten zwei Radkästen erheben, wie das bei lieferwägen der Fall ist, wird das Gestell 10 so auf die Auflageläche gestellt, daß zwei Traversenenden 28 über den Radkästen Liegen, während die Pfosten 22 zwischen den Randkästen in deren Nähe stehen.

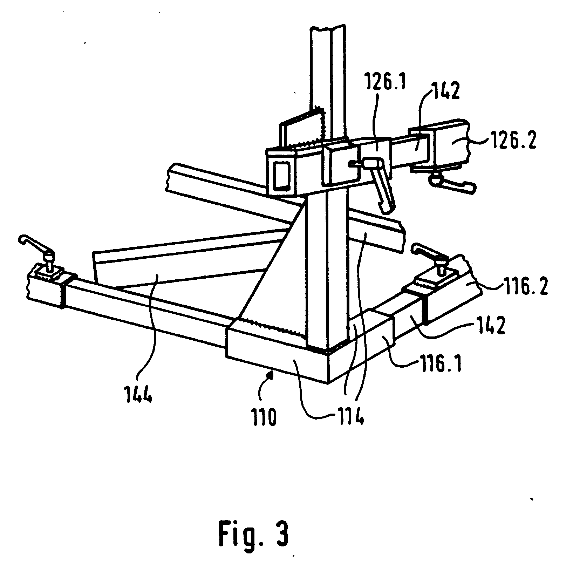

Die Weiterbildung der zuvor beschriebenen Ausführungsform unterscheidet sich von dieser gemäß Fig. 3 dadurch, daß die hier teleskopierbaren Querschenkel 116 des Grundrahmens 114 und die parallel überlagerten. hier teleskopierbaren Traversen 126 in der linken Hälfte des Gestells 110 auf gleiche mittellange Strecken unterbrochen sind, die mittels je eines Verbinders 142 des Gestells 110 überbrückt sind. Jeder Verbinder 142 ist einenends im kürzeren Querschenkel- oder Traversenabschnitt 116.1 bzw. 126.1 befestigt und andernends im längeren Querschenkel- oder Traversenabschnitt 116.2 bzw. 126.2 längsverschiebbar angeordnet. zwecks Bündigkeit des engeren Verbinders 142 mit den weiteren, ähnlich profilierten Abschnitten des Querschenkels 116 oder der Traverse 126 ist zwischen diesen Abschnitten ein lückefüllender Stutzen 144 auf den Verbinder 142 zu stecken.

**Patentansprüche**

1.) Vorrichtung zum lagern und Transportieren von mehreren lackierten Türen (38) oder anderen Platten mit im wesentlichen rechtwinkligen Rahmen (36), die an den gegebenenfalls gefalzten Stirnseiten der Platten (38) in der Weise anzuordnen sind, daß ihre längeren Mittellinien die Längslinien der Stirnseiten decken, und welche mittels Schrauben (40) oder dergleichen an den Stirnseiten lösbar zu befestigen sind, **gekennzeichnet** durch ein Rohrgestell (10) mit einem ebenen, rechteckigen Grundrahmen (14), der zwei Paare je paralleler, ggf. teleskopierbarer Schenkel (18) aufweist, mit einem gestützten Pfosten (22) auf jeder Grundrahmenecke und mit zwei parallelen, auf den oberen Pfostenenden gelagerten, ggf. teleskopierbaren Traversen (26) über den die Längsschenkel (18) verbindenden parallelen Querschenkeln (16) des Grundrahmens (14) und durch zwei auf jeder Traverse (26) verschieb- und feststellbar gelagerte, vertikale Lineale (12) zum Einklemmen einer waagrechten Reihe der an den Platten (38) befestigten Rahmen (36), die hochkant auf der Traverse stehen.

2.) Vorrichtung nach Anspruch 1, dadurch **gekennzeichnet,** daß die Traversen (26) länger sind als die Querschenkel (16) des Grundrahmens (14) und freie Enden (28) aufweisen.

3.) Vorrichtung nach Anspruch 1 oder 2, bei der die Querschenkel (116) und die Traversen (126) teleskopierbar sind, dadurch **gekennzeichnet,** daß die Querschenkel (116) und die Traversen (126) je aus zwei profilgleichen ersten und zweiten Rohren (Abschnitte 116.1 und 116.2 bzw. 126.1 und 126.2) und aus einem in diese eingefügten profilähnlichen dritten Rohr (Verbinder 142) bestehen, das im ersten Rohr (116.1 oder 126.1) befestigt und im zweiten Rohr (116.2 oder 126.2) längsverschiebbar angeordnet ist, und daß ein auf den gewählten lichten Abstand des ersten vom zweiten Rohr (116.1 oder 126.1 bzw. 116.2 oder 126.2) abgelängtes, profilgleiches viertes Rohr (Stutzen 144) zwischen dem ersten und dem zweiten Rohr auf dem dritten Rohr (142) angeordnet ist.

**Claims**

1. Device for the storage and transport of a plurality of varnished doors (38) or other plates, comprising substantially rectangular frames (36), which are arranged at the front ends, which in a given case are folded, of the plates (38) in such a manner that their longer centrelines coincide with the longitudinal axes of the front ends and which are detachably fastened to the front ends by means of screws (40) or the like, characterised by a pipe structure (10) with a planar, rectangular base frame (14), which has two pairs of respectively parallel and optionally telescopic limbs (18), with a supported post (22) at each corner of the base frame, and with two parallel and optionally telescopic crossbeams (26) mounted on the upper ends of the posts and above the parallel transverse limbs (16), which connect the longitudinal limbs (18), of the base frame (14), and further characterised by two vertical arms (12) displaceably and fixably mounted on each crossbeam (26) for the clamping in of a horizontal row of the frames (36), which are fastened to the plates (38) and which stand on edge on the crossbeam.

2. Device according to claim 1, characterised thereby, that the crossbeams (26) are longer than the transverse limbs (16) of the base frame (14) and have free ends (28).

3. Device according to claim 1 or 2, in which the transverse limbs (116) and the crossbeams (126) are telescopic, characterised thereby, that the transverse limbs (116) and the crossbeams (126) each consist of two correspondingly profiled first and second pipes (portions 116.1 and 116.2 or 126.1 and 126.2) and of a similarly profiled third pipe (connector 142) inserted therein, which is fastened in the first pipe (116.1 or 126.1) and arranged to be longitudinally displaceable in the second pipe (116.2 or 126.2), and that a correspondingly profiled fourth pipe (support 144) cut in length to the selected clear spacing of the first pipe from the second pipe (116.1 or 126.1; 116.2 or 126.2) is arranged between the first and the second pipe on the third pipe (142).

**Revendications**

1. - Dispositif de stockage et de transport d'une pluralité de portes laquées (38) ou d'autres panneaux avec des cadres (36) sensiblement rectangulaires qui doivent être montés sur les faces frontales éventuellement feuillées des panneaux (38) de telle façon que leurs lignes médianes plus longues coïncident avec les lignes longitudinales des faces frontales, et qui doivent être fixés de manière amovible sur les faces frontales au moyen de vis (40) ou analogues, **caractérisé en ce** qu'il comprend un bâti tubulaire (10) avec un cadre de base (14) rectangulaire plan lequel comporte deux paires de branches (18) respectivement parallèles et éventuellement télescopiques, un poteau étançonné (22) dans chaque coin du cadre de base et deux traverses (26) parallèles montées sur les extrémités supérieures des poteaux et éventuellement télescopiques, au-dessus des branches transversales (16) parallèles du cadre de base (14) qui relient les branches longitudinales (18), et deux règles verticales (12) montées sur chacune des traverses (26) de manière à pouvoir être déplacées et bloquées et destinées à enserrer une rangée horizontale des cadres (36) fixés sur les panneaux (38) qui reposent en position debout sur la traverse.

2. - Dispositif selon la revendication 1, caractérisé en ce que les traverses (26) sont plus longues que les branches transversales (16) du cadre de base (14), et qu'elles présentent des extrémités libres (28).

3. - Dispositif selon l'une des revendications 1 ou 2 dans lequel les branches transversales (116) et les traverses (126) sont télescopiques, caractérisé en ce que les branches transversales (116) et les traverses (126) sont respectivement constituées de deux premiers et seconds tubes à profil identique (sections 116.1 et 116.2 et respectivement 126.1 et 126.2) et d'un troisième tube à profil analogue inséré dans ces derniers (raccord 142), lequel est fixé dans le premier tube (116.1 ou 126.1) et disposé de manière mobile dans le sens longitudinal dans le second tube (116.2 ou 126.2), et qu'un quatrième tube (tubulure 144) coupé à la longueur de l'écartement choisi entre les premier et second tubes (116.1 ou 126.1 et respectivement 116.2 ou 126.2) et présentant un profil identique est monté, entre les premier et second tubes, sur le troisième tube (142).

Fig.1

Fig. 2

**Fig. 3**